# EUROPÄISCHE PATENTSCHRIFT

(11) **EP 4 330 614 B1**
(45) Veröffentlichungstag und Bekanntmachung des Hinweises auf die Patenterteilung: **04.06.2025**
(21) Anmeldenummer: 22726003.1
(22) Anmeldetag: 25.04.2022
(51) Int. Cl.: F27B 1/02, C04B 2/12, F27B 1/10, F27D 17/00, F27B 1/00

(54) **OFEN UND VERFAHREN ZUM BRENNEN VON KARBONATGESTEIN**
KILN AND METHOD FOR BURNING CARBONATE ROCK
FOUR ET PROCÉDÉ POUR CALCINER DES ROCHES CARBONATÉES

(30) Priorität: 27.04.2021 BE 202105326; 27.04.2021 DE 102021204176
(43) Veröffentlichungstag der Anmeldung: 06.03.2024
(73) Patentinhaber: Maerz Ofenbau AG, 8002 Zürich (CH); thyssenkrupp Polysius GmbH, 59269 Beckum (DE); thyssenkrupp AG, 45143 Essen (DE)
(72) Erfinder: PIRINGER, Hannes, 5712 Beinwil am See (CH); BUCHER, Patrick, 5012 Schönenwerd (CH)
(74) Vertreter: thyssenkrupp Intellectual Property GmbH
(86) Internationale Anmeldenummer: PCT/EP2022/060930
(87) Internationale Veröffentlichungsnummer: WO 2022/229119

(56) Entgegenhaltungen:
- EP-A2- 1 555 251
- WO-A1-2021/170478
- DE-A1- 19 845 495
- DE-B3- 102010 060 866
- KR-A- 20030 091 422

## Beschreibung

Die Erfindung betrifft einen Ofen sowie ein Verfahren zum Brennen und Kühlen von Material, wie Karbonatgesteinen, mit einem GGR-Schachtofen. Bei dem Ofen handelt es sich beispielsweise um einen Gleichstrom-Gegenstrom-Regenerativ-Schachtofen (GGR-Schachtofen) oder um einen Schachtofen, insbesondere einen Ringschachtofen.

Das Brennen von Karbonatgestein in einem Schachtofen oder einem GGR-Schachtofen ist seit etwa 60 Jahren bekannt. Ein derartiger, beispielsweise aus der WO 2011/072894 A1 bekannter GGR-Schachtofen weist zwei vertikale, parallele Schächte auf, die zyklisch arbeiten, wobei nur in einem Schacht, dem jeweiligen Brennschacht, gebrannt wird, während der andere Schacht als Regenerativschacht arbeitet. Dem Brennschacht werden Oxidationsgas im Gleichstrom mit dem Material und Brennstoff zugeführt, wobei die dabei entstehenden heißen Abgase zusammen mit der von unten zugeführten, erwärmten Kühlluft über den Überstromkanal in den Abgasschacht geleitet werden, wo die Abgase im Gegenstrom zum Material nach oben abgeleitet werden und das Material dabei vorwärmen. Aus der DE 10 2010 060 866 B3 ist es bekannt, das rückgeführte Abgas in einem Wärmetauscher auf eine Temperatur von 500°C einschrittig zu erwärmen. Das Material wird üblicherweise von oben zusammen mit dem Oxidationsgas in den Schacht aufgegeben, wobei Brennstoffe in der Brennzone eingedüst werden.

Das zu brennende Material passiert üblicherweise in jedem Schacht eine Vorwärmzone zum Vorwärmen des Materials, eine sich daran anschließende Brennzone, in der das Material gebrannt wird und eine sich daran anschließende Kühlzone, in der Kühlluft dem heißen Material zugeführt wird.

Um den Qualitätsanforderungen bezüglich einer hohen Reaktivität des Branntkalkes, wie sie beispielsweise in Stahlwerken gefordert wird, gerecht zu werden, dürfen die Temperaturen in der Brennzone einen Wert von 1100°C, vorzugsweise 1000°C, nicht überschreiten. Des Weiteren steigt die Nachfrage nach umweltfreundlicher Herstellung von Branntkalk ebenfalls, sodass bestimmte Anforderungen an den CO2-Gehalt des Abgases zur anschließenden Nachbehandlung erfüllt werden müssen.

Des Weiteren wird im Rahmen der umweltfreundlichen Herstellung von Branntkalk die Verwendung von alternativen Brennstoffen, wie Wasserstoff oder Methan angestrebt.

Davon ausgehend ist es Aufgabe der vorliegenden Erfindung, einen Ofen, wie einen Schachtofen und/ oder einen GGR-Schachtofen und ein Verfahren zum Brennen von Karbonatgestein mit einem solchen Ofen bereitzustellen, mit welchem Kalk mit einer hohen Reaktivität bei gleichzeitiger CO2-Abscheidung aus dem Abgas und der Verwendung von alternativen Brennstoffen ermöglicht wird.

Diese Aufgabe wird erfindungsgemäß durch eine Vorrichtung mit den Merkmalen des unabhängigen Verfahrensanspruchs 1 und durch ein Verfahren mit den Merkmalen des unabhängigen Vorrichtungsanspruchs 10 gelöst. Vorteilhafte Weiterbildungen ergeben sich aus den abhängigen Ansprüchen.

Nach einem ersten Aspekt umfasst die Erfindung ein Verfahren zum Brennen von Material, wie Karbonatgesteinen, in einem Ofen mit einem oder zwei Schächten, wobei das Material durch einen Materialeinlass in eine Vorwärmzone zum Vorwärmen des Materials, eine Brennzone zum Brennen des Materials und eine Kühlzone zum Kühlen des Materials zu einem Materialauslass strömt, wobei ein Kühlgas in die Kühlzone eingelassen wird, wobei Abgas über einen innerhalb oder oberhalb der Vorwärmzone angeordneten Abgasauslass aus einem Schacht des Ofens ausgelassen wird und wobei das über den Abgasauslass aus dem Schacht ausgelassene Abgas zumindest teilweise in zumindest einen Schacht des Ofens eingeleitet wird. Das Abgas wird vor dem Einleiten in den Schacht zumindest teilweise in einer Kühleinrichtung gekühlt und anschließend in einer Erwärmungseinrichtung auf eine Temperatur von maximal 200°C, insbesondere 50°C bis 160°C, vorzugsweise 70°C bis 120°C erwärmt. Im Anschluss an die Erwärmungseinrichtung wird das Abgas in einem Wärmetauscher auf eine Temperatur von 400°C bis 800°C, insbesondere 600°C erwärmt.

Die Kühlung des Abgases in der Kühleinrichtung und anschließende Erwärmung in der Erwärmungseinrichtung bewirkt eine Verringerung der relativen Feuchte des Abgases. Insbesondere wird das Risiko stark vermindert, dass Wasser auskondensiert und zu Betriebsproblemen in den Verdichtern führt. Dadurch verringert sich zudem das Korrosionsrisiko in den Komponenten der weiteren Abgasbehandlung.

Vorzugsweise wird das gesamte aus dem Schacht ausgelassene Abgas in der Kühleinrichtung gekühlt und anschließend in der Erwärmungseinrichtung erwärmt. Es ist ebenfalls möglich, dass nur ein Teil des Abgases der Kühleinrichtung und anschließend der Erwärmungseinrichtung zugeführt wird.

Bei dem zu brennenden Material handelt es sich vorzugsweise um Kalkstein oder Dolomitstein mit einer Korngröße von 10 bis 200mm, vorzugsweise von 15 bis 120mm, höchstvorzugsweise 30 bis 100mm. Bei dem Kühlgas handelt es sich beispielsweise um Luft. Vorzugsweise wird dem Ofen als Brennstoff Methan oder Wasserstoff zugeführt. Am Abgasauslass weist das Abgas vorzugsweise einen Anteil an Wasser von etwa 15 Vol% bis 40 Vol%, insbesondere 25 Vol% bis 35 Vol% auf, wobei die Temperatur beispielsweise etwa 80°C bis 100°C und insbesondere beim Start der Anlage weniger als 80°C beträgt.

Bei dem Ofen handelt es sich beispielsweise um einen Gleichstrom-Gegenstrom-Regenerativ-Schachtofen mit zwei parallelen Schächten oder einen Schachtofen mit genau einem Schacht. Ein Gleichstrom-Gegenstrom-Regenerativ-Schachtofen weist mindestens zwei Schächte auf, die vorzugsweise parallel zueinander und vertikal angeordnet sind. Die Schächte sind abwechselnd als Brennschacht und als Regenerativschacht betreibbar, wobei jeder Schacht in Strömungsrichtung des Materials eine Vorwärmzone zum Vorwärmen des Materials, eine Brennzone zum Brennen des Materials und eine Kühlzone zum Kühlen des Materials aufweist. Jeder Schacht weist vorzugsweise einen Materialeinlass zu Einlassen von zu brennendem Material in den Schacht auf, wobei sich der Materialeinlass insbesondere am oberen Ende des jeweiligen Schachts befindet, sodass das Material schwerkraftbedingt in den jeweiligen Schacht fällt. Der Materialeinlass und/ oder der Materialauslass ist/sind insbesondere als Schleuse zum Einlassen und/ oder Auslassen von Material in den Schachtofen ausgebildet. Ein als Schleuse ausgebildeter Materialeinlass ist vorzugsweise derart ausgestaltet, dass lediglich das zu brennende Rohmaterial in den Schacht gelangt, nicht aber die Umgebungsluft. Auch ein Austreten von Gas über den Materialeinlass aus dem Schacht wird durch die Materialschleuse verhindert. Vorzugsweise ist die Schleuse derart ausgebildet, dass sie den Schacht luftdicht gegen die Umgebung abdichtet und einen Eintritt von Feststoffen, wie das zu brennende Gut, in den Schacht erlaubt.

Der Verbindungskanal ist zur gastechnischen Verbindung der beiden Schächte ausgebildet und verbindet vorzugsweise die Brennzonen der Schächte miteinander. Im Betrieb des GGR-Schachtofens wird jeweils einer der Schächte als Brennschacht betrieben und ist aktiv, wobei der jeweils andere Schacht als Regenerativschacht betrieben wird und passiv ist. Der GGR-Schachtofen wird insbesondere zyklisch betrieben, wobei nach Ablauf der Zykluszeit die Funktion der Schächte getauscht wird. Dieser Vorgang wiederholt sich fortlaufend. In dem als Brennschacht betriebenen, aktiven Schacht wird über die Brennerlanzen ein Brennstoff in die Brennzone eingeleitet. Das zu brennende Material wird in der Vorwärmzone des Brennschachts vorzugsweise auf eine Temperatur von etwa 700°C erwärmt. In dem als Brennschacht betriebenen Schacht ist die Brennzone als Gleichstrombrennzone ausgebildet, wobei das zu brennende Material parallel zu dem Gas strömt. Das Gas strömt innerhalb des Brennschachts von der Vorwärmzone in die Brennzone und anschießend über den Verbindungskanal in die Brennzone und die Vorwärmzone des Regenerativschachts. In dem als Regenerativschacht betriebenen Schacht strömt das Gas in der Vorwärmzone und der Brennzone im Gegenstrom zu dem zu brennenden Material.

Sowohl in dem Brennschacht als auch in dem Regenerativschacht wird Kühlgas im Gegenstrom zu dem zu kühlenden Material durch die Kühlzone geleitet und vorzugsweise vollständig über den Kühlgasauslass der Kühlluftabzugseinrichtung aus dem Schacht ausgelassen, sodass vorzugsweise kein Kühlgas von der Kühlzone in die Brennzone strömt.

Jeder Schacht weist vorzugsweise zumindest einen Abgasauslass, beispielsweise an dem oberen Ende des Schachts innerhalb der Vorwärmzone, auf. Vorzugsweise ist der Abgasauslass oberhalb der Materialsäule in einem materialfreien Bereich der Vorwärmzone angeordnet. Das Abgas wird vorzugsweise ausschließlich aus einem Schacht, insbesondere dem Regenerativschacht, ausgelassen. Das ausgelassene Abgas wird vorzugsweise dem jeweils anderen Schacht, insbesondere dem Brennschacht, und/ oder über den Verbindungskanal dem Regenerativschacht zugeführt. Vorzugsweise wird lediglich ein Teil des aus dem Regenerativschacht ausgelassenen Abgases zumindest einem Schacht wieder zugeführt. Ein Teil des aus dem Regenerativschacht ausgelassenen Abgases wird beispielsweise aus dem GGR-Schachtofen abgeführt und beispielweise einer weiteren Behandlung, wie einer Sequestrierung, zugeführt. Das Abgas besteht vorzugsweise aus CO₂ und optional H₂O.

Der Brennzone und/ oder der Vorwärmzone des als Brennschacht betriebenen Schachts wird vorzugsweise ein Brennstoff über eine Brennstoffleitung zugeführt. Vorzugsweise wird der Brennstoff Brennerlanzen zugeführt, die in der Brennzone und/ oder der Vorwärmzone angeordnet sind. Bei dem Brennstoff handelt es sich beispielsweise um ein Brenngas, wie Hochofengas, Methan, Wasserstoff oder Erdgas, oder Kohlenstaub oder Biomasse oder flüssige Brennstoffe. In der Brennzone wird das Material vorzugsweise auf eine Temperatur von etwa 1100°C erhitzt.

Jeder Schacht weist vorzugsweise eine Mehrzahl von Brennerlanzen auf, die sich zumindest teilweise durch die Vorwärmzone erstrecken und insbesondere in die Brennzone des jeweiligen Schachts münden und zum Leiten von beispielsweise Brennstoff und/ oder einem Oxidationsgas, wie Luft oder mit Sauerstoff angereicherte Luft oder reinem Sauerstoff, dienen.

Eine Rückführung des Abgases in zumindest einen Schacht ermöglicht die Herstellung von Kalk mit einer hohen Reaktivität, wobei gleichzeitig Prozessgas mit einem CO2-Gehalt von mehr als 90% bezogen auf trockenes Gas hergestellt wird. Bei einem solchen Prozessabgas ist es möglich, dieses mit geringerem Aufwand zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO2-Gehalt, beispielsweise 45% für die Sodaherstellung oder 35% für die Zuckerherstellung oder 30% für die Herstellung von gefälltem Kalziumkarbonat, erzeugt werden.

Insbesondere wird das Abgas in die Vorwärmzone des als Brennschacht betriebenen Schachts eingeleitet. Vorzugsweise weist jeder Schacht einen Gaseinlass, insbesondere einen Verbrennungsgaseinlass auf, der in dem oberen Bereich des Schachts in der Vorwärmzone angeordnet ist und dem Einlass des zur Verbrennung benötigten Gases dient. Beispielsweise wird das Abgas in den Verbindungskanal und/ oder in die Brennzone des als Regenerativschacht betriebenen Schachts eingeleitet. Ein Einleiten des Abgases in den Verbindungskanal ermöglicht eine gleichmäßige Vermischung des Abgases mit den Gasen der Brennzone des Brennschachtes, da in dem Verbindungskanal kein Material vorhanden ist. Vorzugsweise wird lediglich ein Teil des Abgases in den Verbindungskanal und/ oder in die Brennzone des Regenerativschachts eingeleitet.

Gemäß einer ersten Ausführungsform wird das Abgas in der Kühleinrichtung auf eine Temperatur von 10°C bis 50°C, insbesondere 15°C bis 40°C gekühlt. Dabei erfolgt eine zumindest teilweise Kondensation des Wassers in dem Abgas, wodurch die absolute Feuchte des Abgases reduziert wird.

Die Kühleinrichtung und/ oder die Erwärmungseinrichtung sind gemäß einer weiteren Ausführungsform als Wärmetauscher ausgebildet. Dies ermöglicht eine Nutzung der Abwärme, insbesondere der Temperaturdifferenz eines Fluids an einer anderen Position des Ofenprozesses.

Gemäß einer weiteren Ausführungsform wird das Abgas vor der Kühlung in der Kühleinrichtung in einem Filter entstaubt. Der Filter ist vorzugsweise zwischen dem Abgasauslass und der Kühleinrichtung angeordnet. Bei dem Filter handelt es sich vorzugsweise um einen Staubfilter zum Filtern von Staubpartikeln aus dem Abgas. Der Filter wird gemäß einer weiteren Ausführungsform im Überdruck betrieben. Vorzugsweise ist in Strömungsrichtung des Abgases vor dem Filter ein Verdichter, insbesondere ein Ventilator, angeordnet.

Das in der Kühlzone erwärmte Kühlgas wird gemäß einer weiteren Ausführungsform über eine Kühlgasabzugseinrichtung aus der Kühlzone des Schachts ausgelassen und der als Wärmetauscher ausgebildeten Erwärmungseinrichtung zur Erwärmung des in der Kühleinrichtung abgekühlten Abgases zugeführt. Das in der Kühlzone erwärmte Kühlgas wird vorzugsweise über eine Kühlgasabzugseinrichtung aus der Kühlzone des Schachts ausgelassen. Insbesondere wird das in die Kühlzone eingelassene Kühlgas vollständig über die Kühlgasabzugseinrichtung aus dem jeweiligen Schacht ausgelassen.

Die Kühlgasabzugseinrichtung weist vorzugsweise einen materialfreien Raum innerhalb der Kühlzone des Schachts auf. Insbesondere ist der materialfreie Raum als außenliegender Ringraum ausgebildet, der sich umfangsmäßig um vorzugsweise den oberen, an die Brennzone angrenzenden Bereich der Kühlzone erstreckt. In dem materialfreien Ringraum ist insbesondere der Kühlgasauslass angeordnet.

Der materialfreie Raum der Kühlgasabzugseinrichtung ist beispielsweise als Innenzylinder ausgebildet, der sich insbesondere mittig und in vertikaler Richtung durch die Kühlzone erstreckt. Insbesondere erstreckt sich der Innenzylinder zumindest teilweise in die Brennzone hinein. In dem Innenzylinder ist der Kühlgasauslass zum Auslassen des Kühlgases aus dem Schacht angeordnet. Der Innenzylinder weist vorzugsweise einen Kühlgaseinlass zum Einlassen von Kühlgas der Kühlzonen in das Innere des Innenzylinders auf, wobei der Kühlgaseinlass vorzugsweise oberhalb des Kühlgasauslasses in dem Innenzylinder angeordnet ist. Insbesondere ist der Kühlgaseinlass am oberen Ende der Kühlzone angeordnet, sodass das Kühlgas vorzugsweise durch die gesamte Kühlgaszone und anschließend in den Innenzylinder der Kühlgasabzugseinrichtung strömt. Innerhalb des Innenzylinders strömt das Kühlgas vorzugsweise nach unten in Richtung des Kühlgasauslasses und in die Kühlgasabzugsleitung. Die Kühlgasabzugseinrichtung ist vorzugsweise derart ausgebildet, dass sie das gesamte Kühlgas aus dem Schacht auslässt, sodass vorzugsweise kein Kühlgas in die Brennzone oder den Verbindungskanal zur Verbindung der Brennzonen der Schächte gelangt. Insbesondere ist die Kühlgasabzugseinrichtung mit einem Regelorgan, wie einer Klappe oder einem Ventil, zur Einstellung der Menge an abzuziehendem Kühlgas verbunden.

In Strömungsrichtung des Abgases schließt sich an die Erwärmungseinrichtung insbesondere ein Wärmetauscher zur Erwärmung des Abgases an. Der Wärmetauscher ist vorzugsweise mit der Kühlgasabzugseinrichtung verbunden, sodass zumindest ein Teil des abgezogenen Kühlgases dem Wärmetauscher zugeführt wird. Der Wärmetauscher ist separat zu der Erwärmungseinrichtung angeordnet, wobei das Abgas in der Erwärmungseinrichtung und anschließend in dem Wärmetauscher erwärmt wird. Vorzugsweise wird das Abgas mittels des Wärmetauschers auf eine Temperatur von 400°C bis 800°C, insbesondere 600°C erwärmt.

In Strömungsrichtung des abgezogenen Kühlgases ist der Wärmetauscher zur Erwärmung des Abgases auf eine Temperatur von 400°C bis 800°C, insbesondere 600°C und anschließend beispielsweise die als Wärmetauscher ausgebildete Erwärmungseinrichtung zur Erwärmung des Abgases auf einer Temperatur von 200°C, insbesondere 50°C bis 160°C, vorzugsweise 70°C bis 120°C angeordnet. Die Erwärmung des Abgases erfolgt vorzugsweise in zwei aufeinanderfolgenden Schritten jeweils in einem jeweiligen Wärmetauscher im Gegenstrom zu dem abgezogenen Kühlgas.

Beispielsweise wird das Abgas im Anschluss an den Wärmetauscher und vor dem Einleiten in den Schacht in einer Heizvorrichtung, auf eine Temperatur von 900°C bis 1100°C, vorzugsweise 1000°C, erhitzt. Die Heizvorrichtung ist vorzugsweise zur indirekten Erwärmung oder zur direkten Erwärmung, beispielsweise mittels eines Oxyfuel Brenners, ausgebildet. Die Heizvorrichtung umfasst beispielsweise eine elektrische Heizvorrichtung, einen elektrischen Durchströmerhitzer, eine Solareinrichtung, einen Verbrennungsreaktor und/ oder einen Wärmetauscher und ist insbesondere mit erneuerbaren Energiequellen betreibbar. Bei der Heizvorrichtung handelt es sich beispielsweise um eine elektrisch betriebene Heizvorrichtung. Insbesondere wird die Heizvorrichtung mittels Solarenergie betrieben und umfasst vorzugsweise einen Solarreceiver, insbesondere eine Photovoltaikanlage zur Erzeugung von elektrischer Energie mittels Solarenergie. Die Heizeinrichtung umfasst beispielsweise eine Solarthermie-Anlage, wobei beispielsweise ein Wärmetauscherfluid mittels Solarenergie erhitzt wird und in einem Wärmetauscher vorzugsweise im Gegenstrom zu dem rezirkulierten Abgas dieses erhitzt. Beispielsweise umfasst die Heizvorrichtung einen Solarreceiver, der das rezirkulierte Abgas insbesondere direkt erhitzt. Der Solarreceiver umfasst dazu beispielsweise einen Teil der Abgasauslassleitung. Die Heizvorrichtung weist beispielsweise einen Verbrennungsreaktor auf, der vorzugsweise zur Verbrennung von erneuerbaren Energieträgern, wie beispielsweise Holz, ausgebildet ist, wobei an Stelle von Luft vorzugsweise Sauerstoff zugeführt wird um den Eintrag von Stickstoff zu vermeiden. Vorzugsweise umfasst die Heizvorrichtung einen Wärmetauscher zur Erhitzung des Abgases im Gegenstrom zu einem Wärmeträgerfluid. Das Wärmeträgerfluid wird beispielsweise mittels Solarenergie und/ oder dem Verbrennungsreaktor erhitzt.

Vorzugsweise erfolgt eine thermische Behandlung des Abgases in vier aufeinanderfolgenden Schritten, wobei in einem ersten Schritt das Abgas auf eine Temperatur von 10°C bis 50°C, insbesondere 15°C bis 40°C gekühlt wird, in einem zweiten Schritt das Abgas auf eine Temperatur von maximal 200°C, insbesondere 50°C bis 160°C, vorzugsweise 70°C bis 120°C erwärmt wird, in einem dritten Schritte das Abgas auf eine Temperatur von 400°C bis 800°C, insbesondere 600°C erwärmt wird und in einem optionalen vierten Schritt das Abgas auf eine Temperatur von 900°C bis 1100°C, vorzugsweise 1000°C, erhitzt wird.

Gemäß einer weiteren Ausführungsform umfasst der Ofen einen Gleichstrom-Gegenstrom-Regenerativ-Schachtofen mit zwei Schächten, die abwechselnd als Brennschacht und als Regenerativschacht betrieben werden und mittels eines Verbindungskanals miteinander verbunden sind, wobei in dem als Brennschacht betriebenen Schacht eine Gleichstrombrennzone ausgebildet ist, wobei das aus dem Schacht ausgelassene Abgas in die Vorwärmzone des als Brennschacht betriebenen Schachts und/ oder in den Verbindungskanal und/ oder in die Brennzone des als Regenerativschacht betriebenen Schachts eingeleitet wird. Das Abgas wird gemäß einer weiteren Ausführungsform stromabwärts der Erwärmungseinrichtung und vor dem Einleiten in den Verbindungskanal oder in die Brennzone des als Regenerativschacht betriebenen Schachts, insbesondere mittel der Heizvorrichtung auf eine Temperatur von 900°C bis 1100°C, vorzugsweise 1000°C, erhitzt.

Gemäß einer weiteren Ausführungsform umfasst der Ofen einen Schachtofen mit genau einem Schacht, wobei innerhalb der Brennzone eine Gleichstrombrennzone ausgebildet ist. Vorzugsweise wird der Schachtofen im Überdruck betrieben.

Dem Schacht, insbesondere dem als Brennschacht betriebenen Schacht eines GGR-Ofens, wird vorzugsweise ein Oxidationsmittel zugeführt. Bei dem Oxidationsmittel handelt es sich beispielswiese um reinen Sauerstoff oder um sauerstoffreiches Gas mit einem Sauerstoffanteil von mindestens 70 bis 95%, vorzugsweise 90%. Das Oxidationsmittel wird vorzugsweise zusammen mit dem Abgas in den Schacht eingeleitet. Es ist ebenfalls denkbar, dass der Schacht in der Vorwärmzone und/oder der Brennzone einen separaten Oxidationsmitteleinlass zum Einlassen des Oxidationsmittels separat zu dem Abgas in den Schacht aufweist.

Die Erfindung umfasst auch einen Ofen zum Brennen und Kühlen von Material, wie Karbonatgesteinen, mit einem oder zwei Schächten, wobei ein Schacht des Ofens in Strömungsrichtung des Materials eine Vorwärmzone zum Vorwärmen des Materials, eine Brennzone zum Brennen des Materials und eine Kühlzone zum Kühlen des Materials aufweist. Ein Schacht des Ofens weist einen innerhalb oder oberhalb der Vorwärmzone angeordneten Abgasauslass zum Auslassen von Abgas aus dem Schacht auf, und wobei zumindest ein Abgasauslass mit einem Gaseinlass zum Einlassen von Gas in einen Schacht des Ofens verbunden ist. Der Ofen weist in Strömungsrichtung des Abgases stromabwärts des Abgasauslasses eine Kühleinrichtung und eine Erwärmungseinrichtung auf, wobei die Erwärmungseinrichtung stromabwärts der Kühleinrichtung angeordnet ist und derart ausgebildet ist, dass sie das Abgas auf eine Temperatur von maximal 200°C, insbesondere 50°C bis 160°C, vorzugsweise 70°C bis 120°C erwärmt, wobei stromabwärts der Erwärmungseinrichtung ein Wärmetauscher angeordnet ist, der derart ausgebildet ist, dass er das Abgas auf eine Temperatur von 400°C bis 800°C, insbesondere 600°C erwärmt, wobei zumindest ein Abgasauslass mit einem Gaseinlass zum Einlassen des erwärmten Abgases in einen Schacht des Ofens verbunden ist

Die mit Bezug auf das Verfahren zum Brennen von Material, wie Karbonatgesteinen, in einem Ofen beschriebenen Ausführungsformen und Vorteile treffen in vorrichtungsgemäßer Entsprechung ebenfalls auf den Ofen zu.

Gemäß einer Ausführungsform ist die Kühleinrichtung derart ausgebildet, dass sie das Abgas auf eine Temperatur von 10°C bis 50°C, insbesondere 15°C bis 40°C kühlt. Gemäß einer weiteren Ausführungsform ist wobei die Kühleinrichtung und/ oder die Erwärmungseinrichtung als Wärmetauscher ausgebildet. Stromaufwärts der Kühleinrichtung ist gemäß einer weiteren Ausführungsform ein Filter zum Entstauben des Abgases angeordnet.

Die Kühlzone weist gemäß einer weiteren Ausführungsform einen Kühlgaseinlass zum Einlassen von Kühlgas in die Kühlzone und eine Kühlgasabzugseinrichtung zum Abführen von Kühlgas aus dem Schacht auf, wobei die Kühlgasabzugseinrichtung mit der als Wärmetauscher ausgebildeten Erwärmungseinrichtung zur Erwärmung des Abgases verbunden ist. Stromaufwärts des Filters ist gemäß einer weiteren Ausführungsform ein Verdichter, insbesondere Gebläse oder ein Ventilator, angeordnet.

Der Ofen umfasst gemäß einer weiteren Ausführungsform einen Gleichstrom-Gegenstrom-Regenerativ-Schachtofen mit zwei Schächten, die abwechselnd als Brennschacht und als Regenerativschacht betreibbar und mittels eines Verbindungskanals miteinander verbunden sind, wobei in dem als Brennschacht betriebenen Schacht eine Gleichstrombrennzone ausgebildet ist, wobei jeder Schacht einen innerhalb oder oberhalb der Vorwärmzone angeordneten Abgasauslass zum Auslassen von Abgas aus dem Schacht aufweist, wobei zumindest ein Abgasauslass mit einem Gaseinlass zum Einlassen von Gas in zumindest einen Schacht verbunden ist, wobei der Gaseinlass in der Vorwärmzone des als Brennschacht betriebenen Schachts und/ oder in dem Verbindungskanal und/ oder der Brennzone des Schachts und/oder einem materialfreien Raum in dem Schacht angeordnet ist.

Zwischen dem Abgasauslass und dem Gaseinlass in dem Verbindungskanal und/ oder der Brennzone ist gemäß einer weiteren Ausführungsform ein Wärmetauscher und/ oder eine Heizeinrichtung, insbesondere eine elektrische Heizvorrichtung, eine Solareinrichtung oder ein Verbrennungsreaktor, zum Erwärmen des Abgases angeordnet.

Der Ofen umfasst gemäß einer weiteren Ausführungsform einen Schachtofen mit genau einem Schacht, wobei die Brennzone zumindest teilweise als Gleichstrombrennzone ausgebildet ist. Vorzugsweise wird bei einem als Schachtofen mit nur einem Schacht ausgebildeten Ofen das Abgas in die Brennzone des Schachts eingeleitet. Insbesondere wird bei einem als GGR-Schachtofen ausgebildeten Ofen das Abgas in die Vorwärmzone und/ oder die Brennzone des als Brennschacht betriebenen Schachts und/ oder in den Verbindungskanal und/ oder in die Brennzone des als Regenerativschacht betriebenen Schachts eingeleitet.

### Beschreibung der Zeichnungen

Die Erfindung ist nachfolgend anhand mehrerer Ausführungsbeispiele mit Bezug auf die beiliegenden Figuren näher erläutert.
- Fig. 1: zeigt eine schematische Darstellung eines GGR-Schachtofens in einer Schnittansicht gemäß einem Ausführungsbeispiel.
- Fig. 2: zeigt eine schematische Darstellung eines Schachtofens zum Brennen und/oder Kalzinieren von stückigem Gut, in einem Längsschnitt gemäß einem Ausführungsbeispiel.

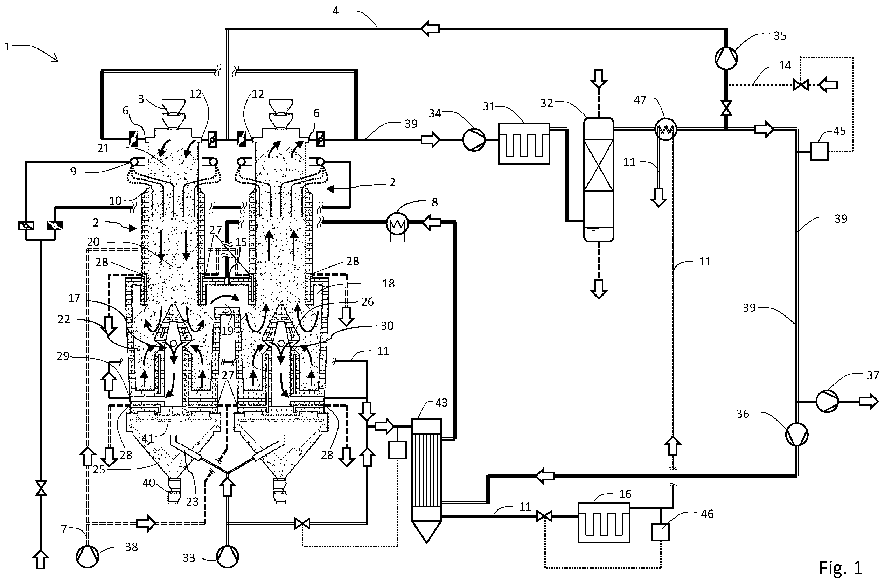

Fig. 1 zeigt einen Ofen, insbesondere einen GGR-Schachtofen 1, mit zwei parallelen und vertikal ausgerichteten Schächten 2. Die Schächte 2 des GGR-Schachtofens 1 sind im Wesentlichen identisch aufgebaut, sodass in Fig. 1 leidglich einer der beiden Schächte 2 mit Bezugszeichen versehen ist und im Folgenden der Einfachheit halber lediglich einer der beiden Schächte 2 beschrieben ist. Jeder Schacht 2 weist jeweils einen Materialeinlass 3 auf zum Einlassen von zu brennenden Material in den jeweiligen Schacht 2 des GGR-Schachtofens 1. Bei dem zu brennenden Material handelt es sich insbesondere um Kalkstein und/ oder Dolomitstein vorzugsweise mit einer Korngröße von 10 bis 200mm, vorzugsweise von 15 bis 120mm, höchstvorzugsweise 30 bis 100mm. Die Materialeinlässe 3 sind beispielhaft an dem oberen Ende des jeweiligen Schachts 2 angeordnet, sodass das Material durch den Materialeinlass 3 schwerkraftbedingt in den Schacht 2 fällt. Der Materialeinlass 3 ist beispielsweise als obere Öffnung des Schachts 2 und insbesondere als Schleuse 3 ausgebildet und erstreckt sich vorzugsweise über den gesamten oder einen Teil des Querschnitts des Schachts 2. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Jeder Schacht 2 weist an seinem oberen Ende des Weiteren einen Verbrennungsgaseinlass 12 zum Einlassen von Verbrennungsgas zur Verbrennung von Brennstoffen auf. Bei dem Verbrennungsgas handelt es sich beispielsweise um entstaubtes Abgas zumindest eines der Schächte 2, wobei das Abgas vorzugsweise mit Sauerstoff angereichert ist. Des Weiteren weist jeder Schacht 2 einen Abgasauslass 6 zum Auslassen von Abgasen aus dem jeweiligen Schacht 2 auf. Jedem Abgasauslass 6 und Verbrennungsgaseinlass 12 ist beispielhaft jeweils ein Regelorgan zugeordnet. Über die Regelorgane, wie beispielsweise einem mengenregulierbarem Verdichter 35, ist vorzugsweise die Menge an Verbrennungsgas in den jeweiligen Verbrennungsgaseinlass 12 und die Menge an über den jeweiligen Abgasauslass 6 abzuziehendes Abgas einstellbar. Der Verbrennungsgaseinlass 12 und der Abgasauslass 6 sind beispielhaft auf dem gleichen Höhenniveau und insbesondere innerhalb der Vorwärmzone 21 des jeweiligen Schachts 2 angeordnet.

Am unteren Ende des Schachts 2 ist ein Materialauslass 40 zum Abführen des gebrannten Materials angeordnet. Bei dem Materialauslass 40 handelt es sich beispielsweise um eine wie mit Bezug auf den Materialeinlass 3 beschriebene Schleuse. Das gebrannte Material wird beispielsweise in einen Auslasstrichter 25 geleitet, an den sich der Materialauslass 40 des Schachts 2 anschließt. Der Auslasstrichter 25 ist beispielhaft trichterförmig ausgebildet. Der Auslasstrichter 25 weist vorzugsweise einen Kühlgaseinlass 23 zum Einlassen von Kühlgas in den jeweilige Schacht 2 auf. Das Kühlgas wird vorzugsweise mittels eines Verdichters 33 in den Kühlgaseinlass geleitet.

Im Betrieb des GGR-Schachtofens 1 strömt das zu brennende Material von oben nach unten durch den jeweiligen Schacht 2, wobei die Kühlluft von unten nach oben, im Gegenstrom zu dem Material, durch den jeweiligen Schacht 2 strömt. Das Ofenabgas wird durch den Abgasauslass 6 aus dem Schacht 2 abgeführt.

Unterhalb des Materialeinlasses 3 und des Verbrennungsgaseinlasses 12 schließt sich in Strömungsrichtung des Materials die Vorwärmzone 21 des jeweilige Schachtes 2 an. In der Vorwärmzone 21 wird das Material und das Verbrennungsgas vorzugsweise auf etwa 700°C vorgewärmt. Vorzugsweise ist der jeweilige Schacht 2 mit zu brennendem Material gefüllt. Das Material wird vorzugsweise oberhalb der Vorwärmzone 21 in den jeweiligen Schacht 2 aufgegeben. Zumindest ein Teil der Vorwärmzone 21 und der sich in Strömungsrichtung des Materials daran anschließende Teil des jeweiligen Schachtes 2 sind beispielsweise mit einer feuerfesten Auskleidung umgeben.

In der Vorwärmzone 21 sind optional eine Mehrzahl von Brennerlanzen 10 angeordnet und dienen jeweils als Einlass für Brennstoff, wie beispielsweise ein Brenngas, Öl oder gemahlener fester Brennstoff. Der GGR-Schachtofen 1 weist beispielsweise eine Kühleinrichtung zur Kühlung der Brennerlanzen 10 auf. Die Kühleinrichtung umfasst beispielsweise eine Mehrzahl von Kühlluftringleitungen, die sich ringförmig um den Schachtbereich erstrecken, in dem die Brennerlanzen 10 angeordnet sind. Durch die Kühlluftringleitungen strömt vorzugsweise Kühlluft zur Kühlung der Brennerlanzen 10. Vorzugsweise werden die Brennerlanzen 10 mittels des über den Abgasauslass 6 abgeführten Abgases gekühlt. Vorzugsweise ist der Abgasauslass 6 mit den Brennerlanzen 10 zur Leitung von Abgas zu den Brennerlanzen 10 verbunden.

Die Brennerlanzen 10 sind vorzugsweise mit einer Brennstoffleitung 9 zur Leitung von Brennstoff zu den Brennerlanzen 10 verbunden. Die Brennstoffleitung 9 ist beispielshaft zumindest teilweise als Ringleitung ausgebildet, die sich umfangsmäßig um den jeweiligen Schacht 2 herum erstreckt. Vorzugsweise weist jeder Schacht 2 eine jeweils den Brennerlanzen 10 des Schachts 2 zugeordnete Brennstoffleitung auf, die insbesondere jeweils ein Regelorgan zur Einstellung der Brennstoffmenge zu den Brennerlanzen 10 aufweist.

An die Vorwärmzone 21 schließt sich in Strömungsrichtung des Materials die Brennzone 20 an. In der Brennzone 20 wird der Brennstoff verbrannt und das vorgewärmte Material bei einer Temperatur von etwa 1000°C gebrannt. Der GGR-Schachtofen 1 weist des Weiteren einen Verbindungskanal 19 zum gastechnischen Verbinden der beiden Schächte 2 miteinander auf. In dem Verbindungskanal 19 ist insbesondere kein zu brennendes Material vorhanden.

Die Fig. 1 zeigt beispielhaft einen GGR-Kalkofen 1 mit runden Schachtquerschnitten. Der Schachtquerschnitt kann jedoch eine andere geometrische Kontur aufweisen, wie beispielsweise rund, halbrund, oval, viereckig oder vieleckig.

An die Brennzone 20 schließt sich in Strömungsrichtung des Materials in jedem Schacht 2 eine Kühlzone 22 an, die sich bis zum Materialauslass 40 erstreckt. Das Material wird innerhalb der Kühlzone 22 auf etwa 100°C im Gegenstrom zu dem Material strömendem Kühlgas abgekühlt.

Jede Kühlzone 22 weist jeweils eine Kühlluftabzugseinrichtung 17 mit jeweils einem Kühlgasauslass 29 auf. Das über den Kühlgaseinlass 23 in die Kühlzone 22 strömende Kühlgas strömt vorzugsweise vollständig aus dem Kühlgasauslass 29 der Kühlluftabzugseinrichtung 17 aus dem jeweiligen Schacht 2 heraus.

Kühlgasabzugseinrichtung 17 auf, die einen Innenzylinder 26 umfasst, der sich von der Kühlzone 22 zumindest teilweise in die Brennzone 20 erstreckt und einen Kühlgasauslass 29 aufweist, der mit der Kühlgasabzugsleitung 11 verbunden ist.

Die Kühlzone 22 ist beispielhaft in einem Schachtabschnitt ausgebildet, der einen in etwa konstanten Querschnitt aufweist, wobei der Schachtquerschnitt der Kühlzone 22 dem Schachtquerschnitt dem unteren Bereich der Brennzone 20 entspricht. Beispielsweise ist auf der Höhe des Verbindungskanals 19 ein materialfreier Ringraum ausgebildet. Jeder Schacht 2 des GGR-Schachtofens 1 weist vorzugsweise einen Innenzylinder 26 auf, der sich mittig in vertikaler Richtung durch die Kühlzone 22 erstreckt. Beispielhaft erstreckt sich der Innenzylinder 26 von der Austragseinrichtung 41 durch die Kühlzone 22 in die Brennzone 20 bis auf die Höhe des Verbindungskanals 19. Zur Kühlung des Innenzylinders 29 sind in dessen Außenwände eine Mehrzahl von Kühlluftkanälen ausgebildet, die mit einer Kühlluftleitung 7 zur Leitung von Kühlluft verbunden sind. Die Kühlluft wird vorzugsweise mittels eines Verdichters 38 über die Kühlluftleitung 7 in die Kühlluftkanäle des Innenzylinders 26 geleitet. Die erwärmte Kühlluft wird beispielhaft in die Kühlgasabzugsleitung 11 geleitet und vorzugsweise zur Erwärmung des Abgases in den Wärmetauscher 43 geführt. Beispielsweise wird die erwärmte Kühlluft als Energiequelle für anderer Prozesse wie zum Beispiel zur Trocknung von Biomasse oder Kalkstein verwendet. Die Innenzylinder 26 weisen jeweils einen sich radial nach außen erstreckenden Kühllufteinlass 27 und einen Kühlluftauslass 28, die mit der Kühlluftleitung 7 verbunden sind.

Der Innenzylinder 26 der Kühlgasabzugseinrichtung 17 weist einen Kühlgasauslass 29 auf, der sich von dem Innenzylinder 26 radial nach außen durch die Schachtwand erstreckt und der Leitung von Kühlgas aus dem Innenzylinder in die Kühlgasabzugsleitung 11 dient. Der Innenzylinder 26 weist des Weiteren einen Kühlgaseinlass 30 zum Einlassen von Kühlgas aus der Kühlzone 22 in den Innenzylinder 26 auf. Der Kühlgaseinlass 30 erstreckt sich durch die Innenzylinderwand in die Kühlzone 22 und verbindet das Innere des Innenzylinders 26 mit der Kühlzone 22. Der Kühlgaseinlass 30 ist vorzugsweise oberhalb des Kühlgasauslasses 29 in der Kühlzone 22 angeordnet. Das Kühlgas strömt im Betrieb des GGR-Schachtofens 1 von unten nach oben durch die Kühlzone 22 und in den Kühlgaseinlass 30 in den Innenzylinder 26 der Kühlgasabzugseinrichtung 17. Vorzugsweise strömt das gesamte in die Kühlzone 22 eingeleitete Kühlgas durch die Kühlgaseinlässe 30 in die Kühlgasabzugseinrichtung 17, sodass kein Kühlgas in die Brennzone 20 gelangt. Der Kühlluftauslass 29 des Innenzylinders 26 ist vorzugsweise im unteren Bereich der Kühlzone 22 angeordnet. Das Kühlgas strömt insbesondere von dem Kühlgaseinlass 30 in dem Innenzylinder 26 nach unten zu dem Kühlgasauslass 29.

An dem materialauslassseitigen Ende eines jeden Schachtes 2 ist vorzugsweise eine Austragseinrichtung 41 angeordnet. Die Austragseinrichtungen 41 umfassen beispielsweise horizontale Platten, vorzugsweise einen Austragstisch, die einen seitlichen Durchtritt des Materials zwischen dem Austragstisch und der Gehäusewand des GGR-Schachtofens erlauben. Die Austragseinrichtung 41 ist vorzugsweise als Schub- oder Drehtisch oder als Tisch mit Schubräumer ausgeführt. Dies ermöglicht eine gleichmäßige Durchsatzgeschwindigkeit des Brennguts durch die Schächte 2. Die Austragseinrichtung 41 umfasst des Weiteren beispielhaft den Auslasstrichter 25, der sich an den Austragstisch anschließt und an dessen unterem Ende der Materialauslass 40 angebracht ist.

Im Betrieb des GGR-Schachtofens 1 ist jeweils einer der Schächte 2 aktiv, wobei der jeweils andere Schacht 2 passiv ist. Der aktive Schacht 2 wird als Brennschacht und der passive Schacht 2 als Regenerativschacht bezeichnet. Der GGR-Schachtofen 1 wird insbesondere zyklisch betrieben, wobei eine übliche Zykluszahl beispielsweise 75 bis 150 Zyklen pro Tag beträgt. Nach Ablauf der Zykluszeit wird die Funktion der Schächte 2 getauscht. Dieser Vorgang wiederholt sich fortlaufend. Über die Materialeinlässe 3 wird abwechselnd Material wie Kalk- oder Dolomitstein in die Schächte 2 aufgegeben. In dem als Brennschacht betriebenen, aktiven Schacht 2 wird über die Brennerlanzen 10 ein Brennstoff in den Brennschacht 2 eingeleitet. Das zu brennende Material wird in der Vorwärmzone 21 des Brennschachts auf eine Temperatur von etwa 700°C erwärmt. In dem Ausführungsbeispiel der Fig. 1 wird der linke Schacht 2 als Brennschacht betrieben, wobei der rechte Schacht 2 als Regenerativschacht betrieben wird.

Im Betrieb des GGR-Schachtofens 1 strömt sowohl in dem Brennschacht 2 als auch in dem Regenerativschacht 2 das Kühlgas im Gegenstrom zu dem zu kühlenden Material durch die Kühlzone 22 und wird vorzugsweise vollständig über den Kühlgasauslass 29 aus dem Schacht 2 ausgelassen, sodass vorzugsweise kein Kühlgas von der Kühlzone 22 in die Brennzone 20 strömt.

Innerhalb des als Brennschacht betriebenen Schachts 2 strömt das Verbrennungsgas durch den Verbrennungsgaseinlass 12 in den Brennschacht und im Gleichstrom mit dem Material innerhalb der Brennzone 20 in den als Ringkanal 18 ausgebildeten materialfreien Raum. Von dem materialfreien Raum 18 strömt das Gas über den Verbindungskanal 19 in den als Regenerativschacht betriebenen Schacht 2. Innerhalb des Regenerativschachts strömt das Gas von dem Verbindungskanal 19 und dem materialfreien Raum 18 des Regenerativschachts im Gegenstrom zu dem zu brennenden Material durch die Brennzone 20 in die Vorwärmzone 21 und verlässt den Regenerativschacht durch den Abgasauslass 6 des Regenerativschachts. Vorzugsweise weist das aus dem Schacht 2 ausgelassene Abgas eine Temperatur von 60°C bis 160°C, vorzugsweise 100°C auf.

Das Abgas wird in eine sich an den Abgasauslass 6 anschließende Abgasleitung 39 geleitet. Die Abgasleitung 39 weist in Strömungsrichtung des Abgases im Anschluss an den Abgasauslass 6 optional einen Abgasfilter 31 zum Filtern von feinen Partikeln, insbesondere Staub, aus dem Abgas auf. Stromabwärts des Abgasfilters 31 weist die Abgasleitung 39 eine Abzweigung auf, wobei ein Teil des Abgases in einer Verbrennungsgasleitung 4 zu dem Verbrennungsgaseinlass 12 geleitet wird. Stromabwärts der Abzweigung weist die Verbrennungsgasleitung 4 in Strömungsrichtung des Abgases beispielhaft ein Regelorgan, wie beispielsweise eine Drosselklappe, und einen Verdichter 35 auf. Die Verbrennungsgasleitung 4 ist vorzugsweise mit den Verbrennungsgaseinlässen 12 der Schachte 2 verbunden, wobei über ein dem Verbrennungsgaseinlass 12 vorgeschaltetes Regelorgan vorzugsweise lediglich dem Verbrennungsgaseinlass 12 des als Brennschacht betriebenen Schachts 2 das Abgas zugeführt wird. Die Verbrennungsgasleitung 4 ist vorzugsweise mit einer Oxidationsmittelleitung 14 verbunden, sodass ein Oxidationsmittel, vorzugsweise reiner Sauerstoff, in die Verbrennungsgasleitung 4 und anschließend zusammen mit dem Abgas über den Verbrennungsgaseinlass 12 in den Schacht 2 eingeführt wird. Es ist ebenfalls denkbar, dass als Oxidationsmittel ein sauerstoffreiches Gas mit einem Sauerstoffanteil von mindestens 70 bis 95%, vorzugsweise 90% in die Verbrennungsgasleitung 4 eingeführt wird.

Der Teil des Abgases, der nicht zu dem Verbrennungsgaseinlass 12 zurückgeführt wird, wird in der Abgasleitung 39 einem Gaseinlass 15 in dem Verbindungskanal 19 zugeführt. Die Abgasleitung 39 weist stromabwärts der Abzweigung der Verbrennungsgasleitung 4 in Strömungsrichtung des Abgases vorzugsweise einen mengenregulierbaren Verdichter 36, einen Wärmetauscher 43 und optional eine Heizeinrichtung 8 zur Erwärmung des Abgases auf. Der Wärmetauscher 43 ist beispielhaft als Rekuperator ausgebildet, wobei das Abgas im Gegenstrom zu dem abgezogenen Kühlgas erwärmt wird und sich das Kühlgas gleichzeitig abkühlt. Der Wärmetauscher 43 ist insbesondere über eine Kühlgasabzugsleitung 11 mit den Kühlgasauslässen 29 beider Schachte 2 verbunden, sodass das Abgas in dem Wärmetauscher 43 mittels des abgezogenen Kühlgases vorzugsweise im Gegenstrom erwärmt wird. Im Anschluss an den Wärmetauscher weist die Kühlgasabzugsleitung 11 optional ein Regelorgan zum Einstellen der abzuziehenden Kühlgasmenge und einen Filter 16 zum Entstauben des Kühlgases auf. Das Abgas wird in dem Wärmetauscher 43 und/ oder der Heizeinrichtung 8 vorzugsweise auf eine Temperatur von etwa 900°C bis 1100°C, insbesondere 1000°C erhitzt. Es ist ebenfalls denkbar, dass die Abgasleitung 39 lediglich einen Wärmetauscher 43 oder eine Heizeinrichtung 8 zur Erwärmung des Abgases aufweist. Beispielsweise wird das Abgas in dem Wärmetauscher 43 auf eine Temperatur von etwa 600°C und anschließend in der Heizeinrichtung 8 auf eine Temperatur von etwa 1000°C erhitzt.

Bei der Heizeinrichtung 8 handelt es sich beispielsweise um eine elektrisch betriebene Heizeinrichtung. Insbesondere wird die Heizeinrichtung mittels Solarenergie betriebenen. Es ist ebenfalls denkbar, dass die Heizeinrichtung 8 einen Wärmetauscher umfasst, wobei das im Gegenstrom strömende Wärmemittel über Solarenergie erhitzt wird. Die Heizeinrichtung 8 ist vorzugsweise als Verbrennungsreaktor zur Verbrennung von vorzugsweise erneuerbaren Energieträgern, wie Holz, ausgebildet, wobei die Verbrennung vorzugsweise derart erfolgt, dass das Verbrennungsgas einen hohen CO2-Anteil von mindestens 90% aufweist.

Stromabwärts des Abgasfilters 31 ist insbesondere eine Kühleinrichtung 32 angeordnet. Die Kühleinrichtung 32 ist beispielsweise ein Wärmetauscher, der vorzugsweise mit einem Kühlmittel, wie Wasser, im Gegenstrom bestrieben wird. Stromabwärts der Kühleinrichtung 32 ist vorzugsweise eine Erwärmungseinrichtung 47 zur Erwärmung des abgekühlten Abgases angeordnet. Die Erwärmungseinrichtung 47 ist vorzugsweise derart ausgebildet, dass sie das Abgas auf eine Temperatur von maximal 200°C, insbesondere 50°C bis 160°C, vorzugsweise 70°C bis 120°C erwärmt. Die Erwärmungseinrichtung 47 ist vorzugsweise als Wärmetauscher ausgebildet, wobei dieser mit der Kühlgasabzugsleitung 11 verbunden ist, sodass das aus dem Schacht 2 abgezogene Kühlgas der Erwärmungseinrichtung 47 zugeführt wird. Vorzugsweise wird das in dem Filter 16 gefilterte Kühlgas dem Wärmetauscher 47 zugeführt.

Stromabwärts der Erwärmungseinrichtung 47 ist eine Abzweigung angeordnet, über welche zumindest ein Teil des Abgases abgeführt und ein zweiter Teil über die Abgasleitung 39 in einen der Schächte 2 zurückgeführt wird. Die Abgasleitung weist beispielhaft vor und nach der Abzweigung des abzuführenden Abgases jeweils einen Verdichter 34, 36, 37 auf.

Der Verbindungskanal 19 weist einen Gaseinlass 15 zum Einlassen von rezirkuliertem Abgas in den Verbindungskanal 19 auf. Der Gaseinlass 15 ist über die Abgasleitung 39 mit dem Abgasauslass 6 des Schachts 2 verbunden, sodass aus dem Schacht 2 abgeführtes, entstaubtes und erwärmtes Abgas in den Verbindungskanal 19 geleitet wird. Der Gaseinlass 15 ist beispielhaft mittig in der oberen Wand des Gaskanal 15 angeordnet. Es ist ebenfalls denkbar, dass der Gaseinlass 15 an einer davon abweichenden Position in der Wand des Verbindungskanals 19 oder in den Ringkanälen 18 angeordnet ist. Es ist ebenfalls denkbar, dass eine Mehrzahl von Gaseinlässen 15 in dem Verbindungskanal 19 oder in den Ringkanälen 18 angebracht sind, die jeweils mit der Abgasleitung 39 verbunden sind.

Fig. 1 zeigt des Weiteren beispielhaft zwei Gasanalyseeinrichtungen 45, 46. Die Gasanalyseeinrichtungen 45, 46 sind derart ausgebildet, dass sie jeweils den Sauerstoff- und/ oder den CO₂-Gehalt des jeweiligen Gases ermitteln. Eine Gasanalyseeinrichtung 45 ist beispielhaft in der Abgasleitung 39 stromabwärts der Abzweigung der Verbrennungsgasleitung 4 angeordnet und zur Ermittlung des Sauerstoff- und/ oder den CO₂-Gehalt des Abgases ausgebildet. Die Gasanalyseeinrichtung 45 ist insbesondere mit einer nicht dargestellten Regelungseinrichtung zur Übermittlung des ermittelten Sauerstoff- und/ oder den CO2-Gehalts des Abgases verbunden.

Die Oxidationsmittelleitung 14 weist vorzugsweise ein Regelorgan auf, wie beispielsweise ein Ventil oder eine Klappe auf, über welches die Menge an Oxidationsmittel in die Verbrennungsgasleitung 4 einstellbar ist. Das Regelorgan ist vorzugsweise mit der Regeleinrichtung verbunden, wobei die Regeleinrichtung insbesondere derart ausgebildet ist, dass sie die Menge an Oxidationsmittel in die Verbrennungsgasleitung 4 in Abhängigkeit des mittels der Gasanalyseeinrichtung 45 ermittelten Sauerstoff- und/ oder den CO₂-Gehalts des Abgases regelt.

Die Regelung dient insbesondere einer vollständigen Verbrennung des Brennstoffes, der über die Brennstoffleitung 9 dem GGR-Schachtofen 1 zugeführt wird. Ein unerwünscht hoher Sauerstoffanteil in der Abgasleitung 39 wird damit verhindert. Zur Kontrolle des gewünschten CO₂-Gehalts in der Abgasleitung 39, wird der CO₂-Gehalt ebenfalls gemessen.

Eine Gasanalyseeinrichtung 46 ist beispielhaft in der Kühlgasabzugsleitung 11, insbesondere stromabwärts des Wärmetauschers 43 und beispielsweise des Filters 16 angeordnet und zur Ermittlung des Sauerstoff- und/ oder den CO₂-Gehalt des abgeführten Kühlgases ausgebildet. Die Gasanalyseeinrichtung 46 ist insbesondere mit der nicht dargestellten Regelungseinrichtung zur Übermittlung des ermittelten Sauerstoff- und/ oder den CO₂-Gehalts des Kühlgases verbunden.

Die Kühlgasabzugsleitung 11 weist vorzugsweise ein Regelorgan auf, wie beispielsweise ein Ventil oder eine Klappe auf, über welches die Menge an über die Kühlgasabzugseinrichtung 17 abzuführendem Kühlgas einstellbar ist. Das Regelorgan ist vorzugsweise mit der Regeleinrichtung verbunden, wobei die Regeleinrichtung insbesondere derart ausgebildet ist, dass sie die Menge an über die Kühlgasabzugseinrichtung 17 abgeführtem Kühlgas in Abhängigkeit des mittels der Gasanalyseeinrichtung 46 ermittelten Sauerstoff- und/ oder den CO₂-Gehalts des Kühlgases regelt.

Die Regelung dient insbesondere einem möglichst vollständigen Abzug des Kühlgases aus dem GGR-Schachtofen 1 bei einem gleichzeitig möglichst geringen oder vorzugsweise keinem CO₂ in der Kühlgasabzugsleitung 11.

Der mit dem vorangehend beschriebenen GGR-Schachtofen 1 hergestellte Kalk weist eine hohe Reaktivität auf, wobei gleichzeitig Prozessgas mit einem CO2-Gehalt von mehr als 90% bezogen auf trockenes Gas hergestellt wird. Bei einem solchen Prozessabgas ist es mit geringerem Aufwand möglich, dieses zu verflüssigen und zu sequestrieren. Beispielsweise wird das verflüssigte Prozessabgas weiteren Verfahrensschritten zugeführt oder gelagert. Alternativ kann mit dem vorangehend beschriebenen GGR-Schachtofen auch Abgas mit weniger CO2-Gehalt, beispielsweise 45% für die Sodaherstellung oder 35% für die Zuckerherstellung oder 30% für die Herstellung von gefälltem Kalziumkarbonat, erzeugt werden.

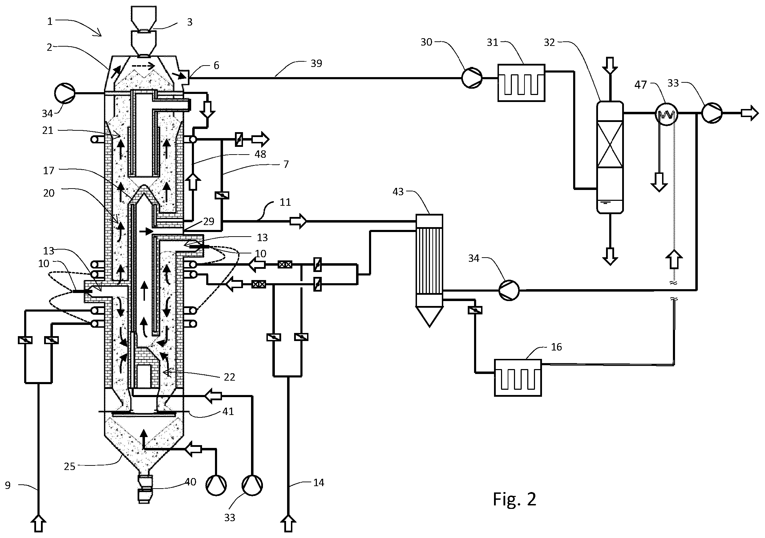

Fig. 2 zeigt eine weitere Ausführungsform eines Ofens 1, insbesondere eines Schachtofens 1, wie ein Ringschachtofen. Der Schachtofen 1 umfasst einen Schacht 2, der sich vorzugsweise in vertikaler Richtung erstreckt und beispielsweise einen im Wesentlichen konstanten Querschnitt aufweist. Beispielsweise weist der Schacht 2 einen runden, insbesondere kreisförmigen, oder eckigen, insbesondere viereckigen Querschnitt auf. Der Schacht 2 ist von einer Schachtwand umgeben, die beispielsweise aus Stahl mit einer sich daran anschließenden gemauerten, feuerfesten Innenwand ausgebildet ist. Der Schacht 2 weist an seinem oberen Ende einen Materialeinlass 3 auf, der beispielsweise als obere Öffnung des Schachts 2 und insbesondere als Schleuse 3 ausgebildet ist und sich vorzugsweise über den gesamten oder einen Teil des Querschnitts des Schachts 2 erstreckt. Der Materialeinlass 3 dient dem Einlassen von zu brennenden Material in den Schachtofen 1. Ein als Schleuse 3 ausgebildeter Materialeinlass ist vorzugsweise derart ausgestaltet, dass lediglich das zu brennende Rohmaterial in den Schacht 2 gelangt, nicht aber die Umgebungsluft. Vorzugsweise ist die Schleuse 3 derart ausgebildet, dass sie den Schacht 2 luftdicht gegen die Umgebung abdichtet und einen Eintritt von Feststoffen, wie das zu brennende Gut, in den Schacht erlaubt.

Der Schacht 2 weist in einem oberen Bereich einen Abgasauslass 6 zum Abführen von Ofenabgas aus dem Schacht 2 auf. Das Abgas wird aus dem Abgasauslass 6 in eine Abgasleitung 39 geführt. Beispielhaft erfolgt der Abzug des Abgases über einen materialfreien Ringspalt. Innerhalb des Schachts 2 wird das zu brennende Material schwerkraftbedingt von oben nach unten durch den Schacht 2 gefördert, wobei der Schacht 2 in Förderrichtung des Materials eine Vorwärmzone 21 zum Vorwärmen des Materials, eine Brennzone 20 zum Brennen des Materials und eine Kühlzone 22 zum Kühlen des gebrannten Materials aufweist. Die Vorwärmzone 21 erstreckt sich vorzugsweise von dem Materialeinlass 3 zu der Brennzone 20 und dient der Vorwärmung des Materials vor dem Brennen. In der Brennzone 20 findet im Unterschied zur Vorwärmzone 21 ein Brennen, insbesondere Kalzinieren, vorzugsweise durch eine Entsäuerung, des Materials statt.

In der Brennzone 20 des Schachts 2 sind vorzugsweise Brennkammerebenen 13 ausgebildet, wobei in jeder Brennkammerebene 13 zumindest eine Brennkammer mit zumindest einem Brenner 10 angeordnet ist. Der Schachtofen 1 weist des Weiteren eine Brennstoffleitung 9 zum Einführen von Brennstoff und eine Oxidationsmittelzuleitung 14 zum Einführen eines Oxidationsmittels in die Brennzone 20 des Schachts 2 auf. Bei dem Oxidationsmittel handelt es sich beispielsweise um Luft, mit Sauerstoff angereicherter Luft, reinem Sauerstoff oder einem Gas mit einem Sauerstoffanteil von etwa mindestens 90%. Die Oxidationsmittelzuleitung 14 und die Brennstoffleitung 9 stehen beispielsweise jeweils mit einem Ventilator, vorzugsweise einem Verdichter, in Verbindung, sodass das Oxidationsmittel und/ oder der Brennstoff in Richtung der Brenner 10 beaufschlagt wird.

Am unteren Ende des Schachts 2 ist ein Materialauslass 40 zum Abführen des gebrannten Materials angeordnet. Bei dem Materialauslass handelt es sich beispielsweise um eine wie mit Bezug auf den Materialeinlass 3 beschriebene Schleuse. An die Kühlzone 22 schließt sich In Materialförderrichtung ein Auslasstrichter 25, insbesondere ein unterer Materialbunker, an, der in dem Materialauslass 40 zum Auslassen des Materials aus dem Schachtofen 1 mündet. In dem Auslasstrichter 25 ist beispielhaft eine Austragsvorrichtung 41 angeordnet, die dem Auslassen von Material aus der Kühlzone 22 des Schachtofens 1 in den Auslasstrichter 25 dient. Bei der Austragsvorrichtung 41 handelt es sich beispielsweise um einen Drehteller oder Schubtische. Beispielhaft ist in dem Schachtofen 1 ein Kühllufteinlass angeordnet, der Kühlluft in den Auslasstrichter 25 einleitet. Vorzugsweise wird die Kühlluft mit einem Druck von bis zu 500 mbar in den Auslasstrichter 25 mittels eines Kühlluftverdichters eingeblasen.

Der Schacht 12 weist des Weiteren eine Kühlgasabzugseinrichtung 17 zum Abführen zumindest eines Teils der Kühlluft aus dem Schacht 2 auf. Die Kühlgasabzugseinrichtung 17 ist beispielsweise als konzentrisch zu dem Schacht 2 und innerhalb dessen angeordneter Innenzylinder ausgebildet. Die Kühlluft durchströmt den Schachtofen 1, insbesondere den Schacht 2, von unten nach oben in vertikaler Richtung und im Gegenstrom zu dem Material und verlässt den Schacht 2 durch die Abgasauslassleitung 39 des Abgasauslass 6 und/ oder durch die Kühlgasabzugseinrichtung 17. Die Kühlgasabzugseinrichtung 29 erstreckt sich beispielhaft mittig durch die Brennzone 20 des Schachts 2 hindurch. Vorzugsweise ist die Brennzone 20 des Schachts 2 zumindest teilweise oder vollständig als Ringraum ausgebildet, der konzentrisch zu der Kühlgasabzugseinrichtung 29 angeordnet ist. Optional erstreckt sich die Kühlgasabzugseinrichtung 29 von der Kühlzone 22 oder der Grenze zwischen der Brennzone 20 und der Kühlzone 22 durch die Brennzone 20 hindurch beispielsweise bis in die Vorwärmzone 21 und durch die Schachtwand aus dem Schacht 2 hinaus. Die Kühlgasabzugseinrichtung 17 ist mit einem Gasauslass 29 zum Auslassen der Kühlluft und beispielsweise Abgas aus dem Schacht 2. Das aus dem Gasauslass 12 austretende Gas strömt vorzugsweise in eine Kühlluftabzugsleitung 11. Die Kühlgasabzugseinrichtung 17 erstreckt sich durch den Schacht 2 beispielsweise bis zu dem Gasauslass oder über diesen hinaus. Der Gasauslass 29 ist vorzugsweise auf dem Höhenniveau der Brennzone 22 angeordnet.

Zur Kühlung der Kühlgasabzugseinrichtung 17 weist der Schacht 2 vorzugsweise einen Kühllufteinlass, durch welchen Kühlluft oberhalb der Austragsvorrichtung 41 mittels eines Kühlluftverdichters 33 in eine Kühlluftleitung 48 eingeleitet wird. Die Kühlluftleitung 48 erstreckt sich vorzugsweise entlang der Kühlgasabzugseinrichtung 17, insbesondere entlang der Außenwand der zylinderförmigen Kühlgasabzugseinrichtung 17 und mündet vorzugsweise in die Kühlluftabzugsleitung 11. Optional mündet die Kühlluftleitung 48 in die zur Kühlen des oberen Innenzylinders angeordnete weitere Kühlluftleitung 7. Die Kühlluftleitungen 7, 48 sind vorzugsweise über eine Regeleirichtung, wie eine Klappe oder ein Ventil mit der Kühlluftabzugsleitung 11 zur geregelten Zufuhr von Kühlluft in die Kühlluftabzugsleitung 11 verbunden.

Der Schachtofen 1 weist des Weiteren optional einen oberen Innenzylinder auf, der sich zumindest teilweise durch die Vorwärmzone 21 erstreckt und oberhalb der Kühlgasabzugseinrichtung 29 angeordnet ist. Der obere Innenzylinder weist einen Auslass zum Auslassen von Gas aus dem Schacht 2 auf, wobei dieser Auslass vorzugsweise verschlossen ist, sodass das in den oberen Innenzylinder 6 eintretende Gas nicht aus dem Schacht 2 austreten kann. Im Betrieb des Schachtofens 1 dient der obere Innenzylinder einer Vergleichmäßigung des Materialflusses innerhalb der Vorwärmzone 21. Vorzugsweise ist in der Vorwärmzone 21 ein Kühllufteinlass zum Kühlen des oberen Innenzylinders angeordnet. Durch den Kühllufteinlass strömt vorzugsweise mittels eines Ventilators 34 beschleunigte Kühlluft in eine um die Vorwärmzone 21 herum angeordnete Ringleitung und/ oder eine zumindest teilweise innerhalb des oberen Innenzylinders angebrachte Kühlluftleitung 7.

Das Material strömt Im Betrieb des Schachtofens 1 im Wesentlichen schwerkraftbedingt durch den Schacht 2 und wird im Gegenstrom oder teilweise im Gleichstrom thermisch behandelt. Vorzugsweise bildet sich innerhalb der Brennzone 20 eine Gegenstrombrennzone aus, in welcher das Material entgegen der Gasströmung durch den Schacht 2 strömt. Die Gegenstrombrennzone bildet sich beispielhaft oberhalb der unteren Brennkammerebene 13 aus. Vorzugsweise bildet sich innerhalb der Brennzone 20 zusätzlich eine Gleichstrombrennzone aus, in welcher die Gasströmung in gleicher Richtung zu der Materialströmung durch den Schacht 2 verläuft. Die Gleichstrombrennzone ist beispielhaft unterhalb der unteren Brennkammerebene 13 ausgebildet. Die Anordnung der Gleichstrombrennzone und der Gegenstrombrennzone kann je nach Fließgeschwindigkeit des Materials und der Gasströmung variieren, wobei die Gegenstrombrennzone vorzugsweise immer oberhalb der Gleichstrombrennzone ausgebildet ist.

Vorzugsweise wird in der Vorwärmzone 21 das Material bis auf eine Temperatur von bis zu ca. 800°C vorgewärmt, wobei die Brennzone 22 beispielsweise eine Temperatur von 800°C bis 1800°C aufweist und in der Kühlzone 22 das Material wieder bis auf ca. 100°C abgekühlt wird.

Im Betrieb des Schachtofens 1 bildet sich in der Brennzone 20 des Schachts 2 eine Materialsäule mit dem über die Materialaufgabe 3 zugeführten Gut aus, wobei das Gut durch Schwerkraft nach unten wandert und im Bereich der Kühlzone 22 über den Materialauslass 40 als kalziniertes Produkt, beispielweise Branntkalk, abgezogen wird. Das Gut füllt dabei die Brennzone 20 vorzugsweise über den gesamten vorzugsweise kreisringförmigen Querschnitt und die Kühlzone 22 aus. Die Kühlgasabzugseinrichtung 29 ist vorzugsweise materialfrei. Das Kühlgas durchströmt die Materialschüttung und gelangt in die Kühlgasabzugseinrichtung 29. Zumindest teilweise gelangt vorzugsweise zusätzlich zu dem Kühlgas Abgas aus der Brennzone 24 in die Kühlgasabzugseinrichtung 17. Die Kühlgasabzugseinrichtung 17 ist über die Kühlluftabzugsleitung 11 mit einem Regelorgan in Form von beispielsweise einer Klappe verbunden zur Regelung der Menge an Luft, die durch die Kühlgasabzugseinrichtung 17, insbesondere die sich daran anschließende Kühlluftabzugsleitung 11 strömt.

Der Abgasauslass 6 zum Abführen des Abgases aus der Vorwärmzone 21 ist vorzugsweise über die Abgasauslassleitung 39 mit einem Abgasfilter 31 zur Entstaubung des Abgases und optional mit einer Kühleinrichtung 32, insbesondere einem Wärmetauscher, zur Kühlung des heißen Abgases verbunden. Über die Abgasauslassleitung 39 wird zumindest teilweise oder vollständig das Abgas der Brennzone 20 aus dem Schacht 2 abgeführt. Das über den Abgasauslass 6 und die Abgasauslassleitung 39 aus dem Schacht 2 abgezogene Abgas wird insbesondere in dem Abgasfilter 31 entstaubt und dann beispielsweise zur weiteren Verarbeitung als entstaubtes Abgas mittels eines Ventilators 33 abgeführt. Optional kann stromabwärts des Abgasfilters 31 eine Kühlung des Abgases, insbesondere in einem Wärmetauscher mit einer Wasserkühlung, in einer Kühleinrichtung 32 erfolgen. Das vor oder nach der Kühleinrichtung 32 abgeführte Abgas weist einen hohen CO2-Anteil auf und kann beispielsweise einer Sequestrierung und/ oder einer weiteren industriellen Verwertung, wie beispielsweise der Herstellung von Soda oder gefälltem Calciumcarbonat, zugeführt werden.

Beispielsweise wird ein Teil des mittels der Abgasauslassleitung 39 abgeführten Abgases in die Brennzone 20 eingeführt, beispielsweise um der Brennzone 20 Wärme zuzuführen und die Verbrennungstemperatur einzustellen.

Stromabwärts des Abgasfilters 31 ist insbesondere eine Kühleinrichtung 32 angeordnet. Die Kühleinrichtung 32 ist beispielsweise ein Wärmetauscher, der vorzugsweise mit einem Kühlmittel, wie Wasser, im Gegenstrom betrieben wird. Stromabwärts der Kühleinrichtung 32 ist vorzugsweise eine Erwärmungseinrichtung 47 zur Erwärmung des abgekühlten Abgases angeordnet. Die Erwärmungseinrichtung 47 ist vorzugsweise derart ausgebildet, dass sie das Abgas auf eine Temperatur von maximal 200°C, insbesondere 50°C bis 160°C, vorzugsweise 70°C bis 120°C erwärmt. Die Erwärmungseinrichtung 47 ist vorzugsweise als Wärmetauscher ausgebildet, wobei dieser mit der Kühlgasabzugsleitung 11 verbunden ist, sodass das aus dem Schacht 2 abgezogene Kühlgas der Erwärmungseinrichtung 47 zugeführt wird. Vorzugsweise wird das in dem Filter 16 gefilterte Kühlgas dem Wärmetauscher 47 zugeführt.

In Strömungsrichtung des Abgases stromabwärts der Erwärmungseinrichtung 47 ist beispielsweise ein Wärmetauscher 43 angeordnet. Der rezirkulierte Teil des Abgases wird vorzugsweise in dem beispielsweise durch die abgezogen Kühlluft betriebenen Wärmetauscher 43 auf insbesondere 500° vorgewärmt. Damit die Wärmeübertragung in dem Wärmetauscher 43 nicht durch Ablagerungen vermindert wird, kann es zweckmäßig sein, dass das über die Kühlgasabzugseinrichtung 17 abgezogene Kühlgas, welches beispielsweise eine Temperatur von 900°C hat, zuvor auf unter 700°C, vorzugsweise unter 600°C, abzukühlen, wobei die Abkühlung beispielsweise durch Vermischung mit Luft oder in der Kühleinrichtung 32 erfolgen kann. Vorzugsweise ist ein Ventilator 34 oder Verdichter, insbesondere ein Hochdruckverdichter, Drehkolben- oder Schraubenverdichter, zum Beschleunigen des rezirkulierten Abgases in Richtung der Oxidationsmittelringleitungen 14 vorgesehen. Es ist ebenfalls denkbar, dass das rezirkulierte Abgas ausschließlich einem Wärmetauscher, nämlich dem Wärmetauscher 43, vor dem Einleiten des Abgases in die Brennzone 20 zugeführt wird. Die als Wärmetauscher ausgebildete Kühleinrichtung 32 ist vorzugsweise in Strömungsrichtung des Abgases nach der Abzweigung des abzuführenden Abgases und beispielsweise vor dem Ventilator 33 angeordnet. Die Kühlluftabzugsleitung 11 ist optional mit einem Filter 16 verbunden, sodass die über die Kühlgasabzugseinrichtung abgezogene Kühlluft gekühlt und entstaubt wird.

### Bezugszeichenliste

- 1: Ofen
- 2: Schacht
- 3: Materialeinlass / Schleuse
- 4: Verbrennungsgasleitung
- 6: Abgasauslass
- 7: Kühlluftleitung
- 8: Heizeinrichtung
- 9: Brennstoffleitung
- 10: Brennerlanzen
- 11: Kühlgasabzugsleitung
- 12: Verbrennungsgaseinlass
- 13: Brennkammerebenen
- 14: Oxidationsmittelleitung
- 15: Gaseinlass
- 16: Filter
- 17: Kühlgasabzugseinrichtung
- 18: Ringkanal / materialfreier Raum
- 19: Verbindungskanal
- 20: Brennzone
- 21: Vorwärmzone
- 22: Kühlzone
- 23: Kühlgaseinlass
- 25: Auslasstrichter
- 26: Innenzylinder
- 27: Kühllufteinlass
- 28: Kühlluftauslass
- 29: Kühlgasauslass
- 30: Kühlgaseinlass
- 31: Abgasfilter
- 32: Kühleinrichtung
- 33 - 38: Verdichter
- 39: Abgasleitung
- 40: Materialauslass / Schleuse
- 41: Austragseinrichtung
- 43: Wärmetauscher / Rekuperator
- 45, 46: Gasanalyseeinrichtung
- 47: Erwärmungseinrichtung
- 48: Kühlluftleitung

## Patentansprüche

1. Verfahren zum Brennen von Material, wie Karbonatgesteinen, in einem Ofen mit einem oder zwei Schächten, wobei das Material durch einen Materialeinlass (3) in eine Vorwärmzone (21) zum Vorwärmen des Materials, eine Brennzone (20) zum Brennen des Materials und eine Kühlzone (22) zum Kühlen des Materials zu einem Materialauslass (40) strömt,
wobei ein Kühlgas in die Kühlzone eingelassen wird,
wobei Abgas über einen innerhalb oder oberhalb der Vorwärmzone (21) angeordneten Abgasauslass (6) aus einem Schacht (2) des Ofens ausgelassen wird und
wobei das über den Abgasauslass (6) aus dem Schacht (2) ausgelassene Abgas zumindest teilweise in zumindest einen Schacht (2) des Ofens eingeleitet wird **dadurch gekennzeichnet, dass**
das Abgas vor dem Einleiten in den Schacht (2) zumindest teilweise in einer Kühleinrichtung (32) gekühlt und anschließend in einer Erwärmungseinrichtung (47) auf eine Temperatur von maximal 200°C, insbesondere 50°C bis 160°C, vorzugsweise 70°C bis 120°C erwärmt wird und wobei das Abgas im Anschluss an die Erwärmungseinrichtung (47) in einem Wärmetauscher (43) auf eine Temperatur von 400°C bis 800°C, insbesondere 600°C erwärmt wird.

2. Verfahren nach Anspruch 1, wobei das Abgas in der Kühleinrichtung (32) auf eine Temperatur von 10°C bis 50°C, insbesondere 15°C bis 40°C gekühlt wird.

3. Verfahren nach einem der vorangehenden Ansprüche, wobei die Kühleinrichtung (32) und/ oder die Erwärmungseinrichtung (47) ein Wärmetauscher sind.

4. Verfahren nach einem der vorangehenden Ansprüche, wobei das in der Kühlzone (22) erwärmte Kühlgas über eine Kühlgasabzugseinrichtung (17) aus der Kühlzone (22) des Schachts (2) ausgelassen wird und wobei das aus der Kühlzone (22) ausgelassene Kühlgas der als Wärmetauscher ausgebildeten Erwärmungseinrichtung (47) zur Erwärmung des in der Kühleinrichtung (32) abgekühlten Abgases zugeführt wird.

5. Verfahren nach einem der vorangehenden Ansprüche, wobei das Abgas vor der Kühlung in der Kühleinrichtung (32) in einem Filter (31) entstaubt wird und wobei der Filter (31) im Überdruck betrieben wird.

6. Verfahren nach einem der vorangehenden Ansprüche, wobei der Ofen einen Gleichstrom-Gegenstrom-Regenerativ-Schachtofen (1) mit zwei Schächten (2) umfasst, die abwechselnd als Brennschacht und als Regenerativschacht betrieben werden und mittels eines Verbindungskanals (19) miteinander verbunden sind, wobei in dem als Brennschacht betriebenen Schacht (2) eine Gleichstrombrennzone ausgebildet ist, wobei das aus dem Schacht (2) ausgelassene Abgas in die Vorwärmzone (21) des als Brennschacht betriebenen Schachts (2) und/ oder in den Verbindungskanal (19) und/ oder in die Brennzone (20) des als Regenerativschacht betriebenen Schachts (2) eingeleitet wird.

7. Verfahren nach Anspruch 6, wobei das Abgas stromabwärts der Erwärmungseinrichtung (47) und vor dem Einleiten in den Verbindungskanal (19) oder in die Brennzone (20) des als Regenerativschacht betriebenen Schachts (2), insbesondere auf eine Temperatur von 900°C bis 1100°C, vorzugsweise 1000°C, erhitzt wird.

8. Verfahren nach einem der Ansprüche 1 bis 5, wobei der Ofen einen Schachtofen mit genau einem Schacht aufweist, wobei innerhalb der Brennzone (20) eine Gleichstrombrennzone (24) ausgebildet wird.

9. Ofen (1) zum Brennen und Kühlen von Material, wie Karbonatgesteinen, mit einem oder zwei Schächten (2), wobei ein Schacht (2) des Ofens in Strömungsrichtung des Materials eine Vorwärmzone (21) zum Vorwärmen des Materials, eine Brennzone (20) zum Brennen des Materials und eine Kühlzone (22) zum Kühlen des Materials aufweist,
wobei ein Schacht (2) des Ofens (1) einen innerhalb oder oberhalb der Vorwärmzone (21) angeordneten Abgasauslass (6) zum Auslassen von Abgas aus dem Schacht (2) aufweist,
**dadurch gekennzeichnet, dass**
der Ofen (1) in Strömungsrichtung des Abgases stromabwärts des Abgasauslasses eine Kühleinrichtung (32) und eine Erwärmungseinrichtung (47) aufweist, wobei die Erwärmungseinrichtung (47) stromabwärts der Kühleinrichtung (32) angeordnet ist und derart ausgebildet ist, dass sie das Abgas auf eine Temperatur von maximal 200°C, insbesondere 50°C bis 160°C, vorzugsweise 70°C bis 120°C erwärmt, wobei stromabwärts der Erwärmungseinrichtung (47) ein Wärmetauscher (43) angeordnet ist, der derart ausgebildet ist, dass er das Abgas auf eine Temperatur von 400°C bis 800°C, insbesondere 600°C erwärmt, wobei zumindest ein Abgasauslass (6) mit einem Gaseinlass (12, 15) zum Einlassen des erwärmten Abgases in einen Schacht (2) des Ofens (1) verbunden ist.

10. Ofen (1) nach Anspruch 9, wobei die Kühleinrichtung (32) und/ oder die Erwärmungseinrichtung (47) ein Wärmetauscher sind.

11. Ofen (1) nach einem der Ansprüche 9 bis 10, wobei die Kühlzone (22) einen Kühlgaseinlass (23) zum Einlassen von Kühlgas in die Kühlzone (22) und eine Kühlgasabzugseinrichtung (17) zum Abführen von Kühlgas aus dem Schacht (2) aufweist und wobei die Kühlgasabzugseinrichtung (17) mit der als Wärmetauscher ausgebildeten Erwärmungseinrichtung (47) zur Erwärmung des Abgases verbunden ist.

12. Ofen (1) nach Anspruch 11, wobei stromaufwärts der Kühleinrichtung (32) ein Filter (31) zum Entstauben des Abgases angeordnet ist und wobei stromaufwärts des Filters (31) ein Verdichter (34), insbesondere Gebläse oder ein Ventilator, angeordnet ist.

13. Ofen (1) nach einem der Ansprüche 9 bis 12, wobei der Ofen (1) einen Gleichstrom-Gegenstrom-Regenerativ-Schachtofen mit zwei Schächten (2) umfasst, die abwechselnd als Brennschacht und als Regenerativschacht betreibbar und mittels eines Verbindungskanals (2) miteinander verbunden sind, wobei in dem als Brennschacht betriebenen Schacht eine Gleichstrombrennzone ausgebildet ist,
wobei jeder Schacht (2) einen innerhalb oder oberhalb der Vorwärmzone (21) angeordneten Abgasauslass (6) zum Auslassen von Abgas aus dem Schacht (2) aufweist, wobei zumindest ein Abgasauslass (6) mit einem Gaseinlass (12, 15) zum Einlassen von Gas in zumindest einen Schacht (2) verbunden ist, wobei der Gaseinlass (12, 15) in der Vorwärmzone (21) des als Brennschacht betriebenen Schachts (2) und/ oder in dem Verbindungskanal (19) und/ oder der Brennzone (20) des Schachts (2) und/oder einem materialfreien Raum in dem Schacht (2) angeordnet ist.

14. Ofen (1) nach Anspruch 13, wobei zwischen dem Abgasauslass (6) und dem Gaseinlass (15) in dem Verbindungskanal (19) und/ oder der Brennzone (20) ein Wärmetauscher (43) und/ oder eine Heizeinrichtung (8), insbesondere eine elektrische Heizvorrichtung, eine Solareinrichtung oder ein Verbrennungsreaktor, zum Erwärmen des Abgases angeordnet ist.

15. Ofen (1) nach einem der einem der Ansprüche 9 bis 12, wobei der Ofen (1) einen Schachtofen mit genau einem Schacht umfasst, wobei die Brennzone zumindest teilweise als Gleichstrombrennzone ausgebildet ist.

## Claims

1. A method of firing material, such as carbonate rocks, in a kiln having one or two shafts, wherein the material flows through a material inlet (3) into a preheating zone (21) for preheating the material, a burning zone (20) for burning the material and a cooling zone (22) for cooling the material to a material outlet (40), whereby a cooling gas is introduced into the cooling zone,
wherein exhaust gas is discharged from a shaft (2) of the furnace via an exhaust gas outlet (6) arranged within or above the preheating zone (21), and
wherein the waste gas discharged from the shaft (2) via the waste gas outlet (6) is at least partially introduced into at least one shaft (2) of the kiln
**characterized in that**
the waste gas is at least partially cooled in a cooling device (32) before being introduced into the shaft (2) and then heated in a heating device (47) to a temperature of at most 200°C, in particular 50°C to 160°C, preferably 70°C to 120°C, and wherein the waste gas is heated to a temperature of 400°C to 800°C, in particular 600°C, in a heat exchanger (43) downstream of the heating device (47).

2. Method according to claim 1, wherein the exhaust gas is cooled in the cooling device (32) to a temperature of 10°C to 50°C, in particular 15°C to 40°C.

3. Method according to one of the preceding claims, wherein the cooling device (32) and/or the heating device (47) is a heat exchanger.

4. Method according to one of the preceding claims, wherein the cooling gas heated in the cooling zone (22) is discharged from the cooling zone (22) of the shaft (2) via a cooling gas discharge device (17) and wherein the cooling gas discharged from the cooling zone (22) is fed to the heating device (47), which is designed as a heat exchanger, for heating the exhaust gas cooled in the cooling device (32).

5. Method according to one of the preceding claims, wherein the exhaust gas is dedusted in a filter (31) before cooling in the cooling device (32) and wherein the filter (31) is operated at overpressure.

6. Method according to one of the preceding claims, wherein the kiln comprises a co-current counter-current regenerative shaft kiln (1) with two shafts (2) which are operated alternately as a firing shaft and as a regenerative shaft and are connected to one another by means of a connecting duct (19), wherein a co-current combustion zone is formed in the shaft (2) operated as a burning shaft, wherein the waste gas discharged from the shaft (2) is introduced into the preheating zone (21) of the shaft (2) operated as a burning shaft and/or into the connecting duct (19) and/or into the burning zone (20) of the shaft (2) operated as a regenerative shaft.

7. Method according to claim 6, wherein the exhaust gas is heated downstream of the heating device (47) and before being introduced into the connecting duct (19) or into the burning zone (20) of the shaft (2) operated as a regenerative shaft, in particular to a temperature of 900°C to 1100°C, preferably 1000°C.

8. The method according to any one of claims 1 to 5, wherein the kiln comprises a shaft kiln with exactly one shaft, wherein a co-current burning zone (24) is formed within the burning zone (20).

9. Kiln (1) for firing and cooling material, such as carbonate rocks, having one or two shafts (2), one shaft (2) of the kiln having, in the direction of flow of the material, a preheating zone (21) for preheating the material, a burning zone (20) for burning the material and a cooling zone (22) for cooling the material,
wherein a shaft (2) of the kiln (1) has an exhaust gas outlet (6) arranged within or above the preheating zone (21) for discharging exhaust gas from the shaft (2),
**characterized in that**
the kiln (1) has a cooling device (32) and a heating device (47) downstream of the exhaust gas outlet in the direction of flow of the exhaust gas, the heating device (47) being arranged downstream of the cooling device (32) and being designed such that it heats the exhaust gas to a maximum temperature of 200°C, in particular 50°C to 160°C, preferably 70°C to 120°C, wherein a heat exchanger (43) is arranged downstream of the heating device (47) and is designed such that it heats the exhaust gas to a temperature of 400°C to 800°C, in particular 600°C, wherein at least one exhaust gas outlet (6) is connected to a gas inlet (12, 15) for admitting the heated exhaust gas into a shaft (2) of the kiln (1).

10. Kiln (1) according to claim 9, wherein the cooling device (32) and/or the heating device (47) is a heat exchanger.

11. Kiln (1) according to one of claims 9 to 10, wherein the cooling zone (22) has a cooling gas inlet (23) for admitting cooling gas into the cooling zone (22) and a cooling gas discharge device (17) for discharging cooling gas from the shaft (2), and wherein the cooling gas discharge device (17) is connected to the heating device (47) designed as a heat exchanger for heating the exhaust gas.

12. Kiln (1) according to claim 11, wherein a filter (31) for dedusting the exhaust gas is arranged upstream of the cooling device (32) and wherein a compressor (34), in particular a blower or a fan, is arranged upstream of the filter (31).

13. Kiln (1) according to one of claims 9 to 12, wherein the furnace (1) comprises a co-current counter-current regenerative shaft furnace with two shafts (2) , which can be operated alternately as a firing shaft and as a regenerative shaft and are connected to one another by means of a connecting duct (2), wherein a co-current burning zone is formed in the shaft operated as a burning shaft,
wherein each shaft (2) has an exhaust gas outlet (6) arranged within or above the preheating zone (21) for discharging exhaust gas from the shaft (2), wherein at least one exhaust gas outlet (6) is connected to a gas inlet (12, 15) for admitting gas into at least one shaft (2), wherein the gas inlet (12, 15) is arranged in the preheating zone (21) of the shaft (2) operated as a burning shaft and/or in the connecting duct (19) and/or the burning zone (20) of the shaft (2) and/or a material-free space in the shaft (2).

14. Kiln (1) according to claim 13, wherein a heat exchanger (43) and/or a heating device (8), in particular an electrical heating device, a solar device or a combustion reactor, for heating the exhaust gas is arranged between the exhaust gas outlet (6) and the gas inlet (15) in the connecting duct (19) and/or the burning zone (20).

15. Kiln (1) according to any one of claims 9 to 12, wherein the kiln (1) comprises a shaft kiln with exactly one shaft, wherein the burning zone is at least partially designed as a co-current firing zone.

## Revendications

1. Procédé de cuisson d'un matériau, tel que des roches carbonatées, dans un four comportant un ou deux puits, dans lequel le matériau s'écoule à travers une entrée de matériau (3) dans une zone de préchauffage (21) pour préchauffer le matériau, une zone de cuisson (20) pour cuire le matériau et une zone de refroidissement (22) pour refroidir le matériau vers une sortie de matériau (40),
un gaz de refroidissement étant admis dans la zone de refroidissement,
dans lequel les gaz d'échappement sont évacués d'un puits (2) du four par une sortie de gaz d'échappement (6) située à l'intérieur ou au-dessus de la zone de préchauffage (21), et
dans lequel les gaz d'échappement évacués de la gaine (2) par la sortie de gaz d'échappement (6) sont introduits au moins partiellement dans au moins une gaine (2) du four
**caractérisé en ce que**
le gaz d'échappement est refroidi au moins partiellement dans un dispositif de refroidissement (32) avant d'être introduit dans le puits (2), puis est réchauffé dans un dispositif de réchauffement (47) à une température maximale de 200°C, en particulier de 50°C à 160°C, de préférence de 70°C à 120°C, et le gaz d'échappement étant réchauffé à la suite du dispositif de réchauffement (47) dans un échangeur de chaleur (43) à une température de 400°C à 800°C, en particulier de 600°C.

2. Procédé selon la revendication 1, dans lequel le gaz d'échappement est refroidi dans le dispositif de refroidissement (32) à une température de 10°C à 50°C, en particulier de 15°C à 40°C.

3. Procédé selon l'une quelconque des revendications précédentes, dans lequel le dispositif de refroidissement (32) et/ou le dispositif de chauffage (47) est un échangeur de chaleur.

4. Procédé selon l'une des revendications précédentes, dans lequel le gaz de refroidissement chauffé dans la zone de refroidissement (22) est évacué de la zone de refroidissement (22) du puits (2) par l'intermédiaire d'un dispositif d'évacuation de gaz de refroidissement (17) et dans lequel le gaz de refroidissement évacué de la zone de refroidissement (22) est amené au dispositif de chauffage (47) réalisé sous forme d'échangeur de chaleur pour le chauffage du gaz d'échappement refroidi dans le dispositif de refroidissement (32).

5. Procédé selon l'une quelconque des revendications précédentes, dans lequel les gaz d'échappement sont dépoussiérés dans un filtre (31) avant d'être refroidis dans le dispositif de refroidissement (32), et dans lequel le filtre (31) fonctionne en surpression.

6. Procédé selon l'une quelconque des revendications précédentes, dans lequel le four comprend un four à cuve régénératif à courant continu et à contre-courant (1) comportant deux cuves (2) fonctionnant alternativement comme cuve de cuisson et comme cuve de régénération et reliées entre elles par un conduit de liaison (19), une zone de combustion à courant continu est formée dans la cuve (2) exploitée comme cuve de combustion, les gaz d'échappement évacués de la cuve (2) étant introduits dans la zone de préchauffage (21) de la cuve (2) exploitée comme cuve de combustion et/ou dans le canal de liaison (19) et/ou dans la zone de combustion (20) de la cuve (2) exploitée comme cuve de régénération.

7. Procédé selon la revendication 6, dans lequel le gaz d'échappement est chauffé en aval du dispositif de chauffage (47) et avant d'être introduit dans le canal de liaison (19) ou dans la zone de combustion (20) du puits (2) fonctionnant comme puits de régénération, en particulier à une température de 900°C à 1100°C, de préférence à 1000°C.

8. Procédé selon l'une quelconque des revendications 1 à 5, dans lequel le four comprend un four à cuve comportant exactement une cuve, une zone de cuisson à courant continu (24) étant formée à l'intérieur de la zone de cuisson (20).

9. Four (1) pour la cuisson et le refroidissement de matériaux, tels que des roches carbonatées, comprenant une ou deux cuves (2), dans lequel une cuve (2) du four présente, dans le sens d'écoulement du matériau, une zone de préchauffage (21) pour préchauffer le matériau, une zone de cuisson (20) pour cuire le matériau et une zone de refroidissement (22) pour refroidir le matériau,
dans lequel une cuve (2) du four (1) présente une sortie de gaz d'échappement (6) disposée à l'intérieur ou au-dessus de la zone de préchauffage (21) pour évacuer les gaz d'échappement de la cuve (2),
**caractérisé en ce que**
le four (1) présente, en aval de la sortie des gaz d'échappement dans le sens d'écoulement des gaz d'échappement, un dispositif de refroidissement (32) et un dispositif de chauffage (47), le dispositif de chauffage (47) étant disposé en aval du dispositif de refroidissement (32) et étant conçu de telle sorte qu'il porte les gaz d'échappement à une température maximale de 200°C, en particulier de 50°C à 160°C, de préférence de 70°C à 120°C, un échangeur de chaleur (43) étant disposé en aval du dispositif de chauffage (47) et étant conçu de manière à chauffer le gaz d'échappement à une température de 400°C à 800°C, en particulier de 600°C, au moins une sortie de gaz d'échappement (6) étant reliée à une entrée de gaz (12, 15) pour l'admission du gaz d'échappement chauffé dans un puits (2) du four (1).

10. Four (1) selon la revendication 9, dans lequel le dispositif de refroidissement (32) et/ou le dispositif de chauffage (47) est un échangeur de chaleur.

11. Four (1) selon l'une des revendications 9 à 10, dans lequel la zone de refroidissement (22) comprend une entrée de gaz de refroidissement (23) pour l'admission de gaz de refroidissement dans la zone de refroidissement (22) et un dispositif d'évacuation de gaz de refroidissement (17) pour l'évacuation de gaz de refroidissement hors de la cuve (2), et dans lequel le dispositif d'évacuation de gaz de refroidissement (17) est relié au dispositif de chauffage (47) conçu comme un échangeur de chaleur pour le chauffage des gaz d'échappement.

12. Four (1) selon la revendication 11, dans lequel un filtre (31) est disposé en amont du dispositif de refroidissement (32) pour dépoussiérer les gaz d'échappement et dans lequel un compresseur (34), en particulier une soufflante ou un ventilateur, est disposé en amont du filtre (31).

13. Four (1) selon l'une quelconque des revendications 9 à 12, dans lequel le four (1) comprend un four à cuve régénératrice à courant continu et à contre-courant comportant deux cuves (2) pouvant fonctionner alternativement comme cuve de cuisson et comme cuve de régénération et reliées entre elles au moyen d'un conduit de liaison (2), une zone de cuisson à courant continu étant formée dans la cuve fonctionnant comme cuve de cuisson,
dans lequel chaque puits (2) présente une sortie de gaz d'échappement (6) disposée à l'intérieur ou au-dessus de la zone de préchauffage (21) pour évacuer le gaz d'échappement hors du puits (2), au moins une sortie de gaz d'échappement (6) étant reliée à une entrée de gaz (12, 15) pour l'admission de gaz dans au moins un puits (2), l'entrée de gaz (12, 15) étant disposée dans la zone de préchauffage (21) du puits (2) fonctionnant comme puits de combustion et/ou dans le canal de liaison (19) et/ou dans la zone de combustion (20) du puits (2) et/ou dans un espace sans matériau dans le puits (2).

14. Four (1) selon la revendication 13, dans lequel un échangeur de chaleur (43) et/ou un dispositif de chauffage (8), en particulier un dispositif de chauffage électrique, un dispositif solaire ou un réacteur de combustion, est disposé entre la sortie de gaz d'échappement (6) et l'entrée de gaz (15) dans le canal de liaison (19) et/ou la zone de combustion (20) pour chauffer le gaz d'échappement.

15. Four (1) selon l'une des revendications 9 à 12, dans lequel le four (1) comprend un four à cuve avec exactement une cuve, la zone de cuisson étant conçue au moins partiellement comme une zone de cuisson à courant continu.
